# EUROPEAN PATENT SPECIFICATION

(11) **EP 2 881 926 B1**
(45) Date of publication and mention of the grant of the patent: **04.08.2021**
(21) Application number: 13195714.4
(22) Date of filing: 04.12.2013
(51) Int. Cl.: G08G 1/16

(54) **Method and control system for controlling movement of a group of road vehicles**
Verfahren und Steuersystem zur Steuerung der Bewegung einer Gruppe von Straßenfahrzeugen
Procédé et système de commande pour commander le mouvement d'un groupe de véhicules routiers

(43) Date of publication of application: 10.06.2015
(73) Proprietor: Volvo Car Corporation, 40531 Göteborg (SE)
(72) Inventor: Rothoff, Marcus, 41729 Göteborg (SE); Brännström, Mattias, 41758 Göteborg (SE); Coelingh, Erik, 44695 Älvängen (SE); Ekmark, Jonas, 42470 Olofstorp (SE); Solyom, Stefan, 424 70 Olofstorp (SE)
(74) Representative: Kransell & Wennborg KB

(56) References cited:
- US-A1- 2010 256 835

## Description

### TECHNICAL FIELD

The present disclosure relates to a method and a control system for controlling movement of a group of road vehicles, the group comprising a lead vehicle and one or more additional vehicles. The disclosure further relates to a method for forming a group.

### BACKGROUND

Driving in a platoon is known from the SARTRE project. SARTRE stands for Safe Road Trains for the Environment, and was funded by the European Commission under the Framework 7 programme, aiming to develop strategies and technologies to allow vehicle platoons to operate on normal public highways with significant environmental, safety and comfort benefits. See for example the Final report of the SARTRE project which is available on the home page of the SARTRE project, www.sartre-project.eu.

A platoon of road vehicles comprises a lead vehicle and a number of following vehicles. The driver of the lead vehicle drives that vehicle in a normal way, while the following vehicles can enter an autonomous or a semi-autonomous control, while following the lead vehicle. Thereby the driver of the following vehicle is relived from the task of driving the vehicle and can to do other things, which would normally be prohibited for reasons of safety, e.g. operate a phone, read a book or watch a movie. In addition, the vehicles of the platoon can travel closer to each other than if each vehicle is individually driven, reducing air resistance and thereby saving fuel, which is positive for both environment and economy and also makes it possible to utilize the road network in a more efficient way.

Although travelling in a platoon offers many advantages, there is a desire to develop the travelling of road vehicles in a group even further.

### SUMMARY

The object of the present disclosure is to overcome or ameliorate at least one of the disadvantages of the prior art, or to provide a useful alternative.

Document US 2010/256835 A1 relates to a method for controlling speed of a vehicle based upon control messages received through a communications device within the vehicle. The method includes monitoring communication of control messages to a propulsion controller wherein control messages includes a speed profile including a current speed command representing instantaneous desired speed of the vehicle and future speed commands representing a predetermined controlled vehicle stop through a speed profile period, detecting anomalous communications of the control messages, and controlling the speed of the vehicle during anomalous communications using the future speed commands.

The invention is defined by the appended claims.

Thus, in a first aspect of the present invention there is provided a method for controlling movement of a group of road vehicles as defined by claim 1.

Moving the group of road vehicles as one body comprises that the movements of the individual vehicles of the group are considered, when moving the group. In principle the whole group moves, although the vehicles' relative positions to each other may vary. The vehicles may also change positions with each other within the group. In certain situations, one or more of the vehicles of the group may even temporarily stand still, e.g. in front of a red traffic light, a stop signal or due to a traffic jam. The shape of the body varies if/when the vehicles move in relation to each other within the group.

The vehicles of the group are not mechanically fixed to each other, instead they can move relative to each other as regards longitudinal position, lateral position, speed and/or acceleration. The vehicles of the group are not physically connected, with e.g. towing bars. Instead they are connected in a non-mechanical way by the communication means. The communication is wireless, e.g. by means of electromagnetic radiation, such as radio waves.

Within the group, the vehicles cooperate with each other, when the group moves. The group does not need to form a coherent physical unit. The group may e.g. be split in subgroups having a foreign object, such as a vehicle not belonging to the group, between the subgroups. The smallest subgroup only comprises one vehicle of the group. The cooperation of the vehicles in the group may comprise utilizing each other's sensors and/or making decisions about how to perform a operation in a current traffic situation.

When a vehicle is driven in an automated mode, it is driving autonomously. The concept of autonomous driving means that the vehicle is driven without human interaction. The lead vehicle and/or the one or more additional vehicles may have an automation level, such that 0% < automation level ≤ 100%, wherein 0% is driven by a driver only and 100% is the vehicle driving completely autonomously. The at least partly automated mode corresponds to an automation level which is greater than 0% and less than or equal to 100%, e.g. a semi-automated mode. When having an automation level anywhere between 0% and 100%, the vehicle may autonomously perform some actions, as e.g. keeping a suitable distance to the vehicle ahead, while the driver perform other actions, as e.g. overtaking another vehicle when appropriate. The closer to 100%, the more actions are performed autonomously by the vehicle. 100% automation level means that the vehicle is driven without any human interaction, i.e. completely autonomously.

The lead vehicle leads the group. Its control unit, i.e. the first control unit, controls the movements of the one or more additional vehicles of the group. The group of the present invention may be controlled based on the number of vehicles in the group, their capabilities and/or surrounding traffic. The lead vehicle is moved in such a way, that its control unit considers the movement of the group as a whole and not just the first vehicle. The group is hence moved as one body, although the shape of the body may vary during the movement of the group.

This differs from a platoon, as known from the SARTRE project, wherein the lead vehicle is driven by a driver, who drives the lead vehicle as an individual vehicle, i.e. the way the driver would normally drive that vehicle, e.g. without considering the movement of the following vehicles. The vehicles of the platoon are generally located in a line behind each other, while the group of the present invention may comprise vehicles, which are laterally interspaced, e.g. being located in more than one lane, or changing between lanes.

When the group of the present invention approaches a foreign object, e.g. a still-standing or slow-moving vehicle, it may be appropriate for the group to overtake the foreign object. The group may then pass the foreign object by the individual vehicles of the group overtaking the foreign object. If seen from above, it would look as if the vehicles of the group would "float" around an obstacle, i.e. the foreign object, in an amoeba-like way or like a worm. During the whole operation of overtaking the foreign object, the group would be moved as one body, although the group would have different shapes during different phases of the operation.

As mentioned above, the group of the invention may temporarily be split into subgroups. The vehicles of a certain subgroup are adapted to cooperate with vehicles of another subgroup.

An example of how the vehicles cooperate in the group, is when the group when travelling on a road with limited visibility, e.g. due to a curve or a hill crest, approaches a foreign object, such as another vehicle, not belonging to the group and moving at a slower speed. It is therefore appropriate for the group to overtake the foreign object. A vehicle at the front of the group may then first overtake the foreign object. Thereafter the other vehicles may follow that first vehicle, when the traffic situation is suitable to perform overtaking. Since the vehicles of the group cooperate, the second most forward vehicle of the group may use information from one or more sensors of the first vehicle, which has already overtaken the foreign object to establish if the traffic situation is suitable for overtaking, e.g. no oncoming traffic. Purely as an example, if the second vehicle still is moving behind the curve or hill crest, and therefore is unable to see oncoming traffic approaching from the other side of the curve or hill crest, the one or more sensor of the first vehicle, which may already have passed the curve or hill crest, may be utilized to overlook the traffic situation behind the curve or hill crest and communicate this to the lead vehicle. Hence, the second vehicle may perform a safe overtaking, controlled by the lead vehicle; although the second vehicle could not detect that it was safe by itself. Sometimes, the traffic situation is not suitable right away for the second vehicle to perform a safe overtaking. The first vehicle may then continue as a subgroup moving in front of the foreign object and the rest of the group may continue, as another subgroup, moving behind the foreign object, until a suitable traffic situation arises. The sensors of more than one vehicle, preferably of all vehicles, of the group may be utilized when judging when the traffic situation is suitable. The lead vehicle may be the first vehicle, the second vehicle, or any other vehicle in the group.

If instead the second vehicle had not been a member of the group, it would have had to only utilize its own sensors, or what its driver can see, and the second vehicle would not have been able to overtake in such a situation. Instead the second vehicle would have had to wait until it itself can establish that the traffic situation is suitable. Consequently, the method of the invention makes it possible to perform an overtaking operation in a safe way on a road section, which traditionally would be deemed as unsuitable. This for example makes it possible to perform such operations for the group on a road having one lane in each direction. The method of the present invention may thus be performed on different kinds of roads, existing in a public road network, such as narrow roads, roads having one lane in each direction and roads having more than one lane in each direction.

In a platoon, as known from the SARTRE project, the whole platoon would overtake the foreign object as one platoon, i.e. as a coherent physical unit. There is thus a need for a long suitable road section, such that there is enough time for all of the vehicles of the platoon to perform the overtaking. It is usually difficult to find such a road section on main roads having one lane in each direction. Hence travelling in the platoon is usually most suitably performed on a road having at least two lanes in the same direction, such as a motorway.

In addition, the lead vehicle of the platoon is located at the front end of the platoon, while in the group of the present invention, the lead vehicle is adapted to assume an arbitrary position in the group, e.g. in the centre or at the end.

When the vehicles are moving in the group, the driver is relieved from the task of driving the vehicle and can to do other things, which would normally be prohibited for reasons of safety, e.g. operate a phone, read a book or watch a movie. In addition, the vehicles of the group can drive closer to each other than if each vehicle is individually driven, reducing air resistance and thereby saving fuel, which is positive for both environment and economy and also makes it possible to utilize the road network in a more efficient way. By utilizing a group of the present invention, there is a larger freedom as regards the shape of the group as compared to the platoon, like the one described by the SARTRE project, e.g. due to that the vehicles may be located in more than one lane, in that the lead vehicle may be located anywhere in the group or in that the group may be split in subgroups.

The group of the present invention may comprise one, two, three, four or more additional vehicles. There is no theoretical upper limit for the number of vehicles in a group, although a practical limit is set by that the vehicles are within communication range of the lead vehicle. The lead vehicle may communicate directly with the other vehicles of the group. As an alternative, or a complement, the lead vehicle may communicate via one or more other vehicles of the group, which may forward the communication, such that a distant vehicle of the group anyway is within communication range of the lead vehicle. It would also be feasible to communicate via infrastructure. Therefore the possible communication range of the lead vehicle is much larger than the communication range of an individual vehicle.

There may be a lot of interspace, or even other non-belonging vehicles, between the vehicles of the group, but sometimes it is preferred to have a rather dense group, since this will help to reduce air resistance and thereby save fuel.

On the other hand, in a platoon as known from the SARTRE project, the vehicles of the platoon form a coherent physical unit. Therefore a practical upper limit of the number of vehicles of the platoon may be set by the length of entrances and exits to the motorway. It is desirable that the platoon is not so long that it would block an entrance and/or an exit to the motorway.

Further, if a car, i.e. a first vehicle, is towing a caravan, i.e. a second vehicle, they would not form a group in the sense of this disclosure, since they are in a fixed relationship to each other by the towing bar, and since the caravan is not capable of running in an at least partly automated mode, instead it is adapted to be towed by the car.

Suitable control units and communication means used for movement of the group of the invention are similar to those utilized for platooning and are thus, as such, known by the skilled person. See for example the above-mentioned Final report of the SARTRE project.

As mentioned above, the group as disclosed herein is moved as one body, although the shape of the body may vary. In particular, the group is steered as one body, although the shape of the body may vary, as explained above. The group may be moved, or steered based on input from the driver of the lead vehicle, by the first control unit considering such input when controlling the group. As an alternative, or a complement, the lead vehicle too may be driven in the at least partly automated mode, such that the group as a whole is at least partly autonomously moved as one body, or in particular autonomously steered as one body, since all vehicles of the group are in an at least partly automated mode.

This differs from the platoon, like the one described by the SARTRE project, wherein the driver of the lead vehicle steers the lead vehicle as an individual vehicle, i.e. the driver drives it as a normal vehicle. This difference enables the group of the present invention to comprise laterally interspaced vehicles, e.g. being in more than one lane, or changing lanes.

The lead vehicle comprises at least one sensor for determining data about the lead vehicle and/or an environment around the lead vehicle. The method in that case comprise the lead vehicle being driven in the at least partly automated mode by utilizing data from the at least one sensor, thereby allowing the group as a whole to be at least partly autonomously driven as one body.

Suitable sensors are known the skilled person. See for example the above-mentioned Final report of the SARTRE project. The sensors may be used to identify lane markings, barriers, a vehicle in front and/or an object on or at the side of the road etc.

The lead vehicle in that case is driven in the at least partly automated mode before forming the group, or it enters the at least partly automated mode, when forming the group. In a similar way, the one or more additional vehicles are driven in the at least partly automated mode before forming the group or it/they may enter the at least partly automated mode when forming the group.

The lead vehicle and/or the one or more additional vehicles may have a selectable automation level, such that 0% < automation level ≤ 100%, wherein 0% is driven by a driver only and 100% is the vehicle driving completely autonomously.

At least one of the one or more additional vehicles comprises at least one sensor for determining data about the one or more additional vehicle and/or an environment around the one or more additional vehicle, the data being communicated to the lead vehicle and utilized for controlling the movement of the group. A majority of the one or more additional vehicles comprises at least one sensor for determining data about the one or more additional vehicle and/or the environment around the one or more additional vehicle. Preferably, substantially all of the one or more additional vehicles comprises at least one sensor for determining data about the one or more additional vehicle and/or the environment around the one or more additional vehicle. Most preferably, all of the one or more additional vehicles comprises at least one sensor for determining data about the one or more additional vehicle and/or the environment around the one or more additional vehicle, the data being communicated to the lead vehicle and utilized for controlling the movement of the group.

Thereby the lead vehicle uses data from sensors located in many vehicles when controlling the movement of the group as a whole. Purely as an example, an object may be located such that the sensor of the additional vehicle is able to detect it, while the sensor of the lead vehicle is unable to detect the object, since the additional vehicle hides it. Since the group utilizes data from sensors of many vehicles, the group as a whole can consider the object. The fields of view of sensors of two sensors of the group, being located in the same or different vehicles, may overlap each other. In that case there is redundant information, which may be used to improve the accuracy of the determined data. The sensors of the different vehicles may thus be used to complement each other.

Further, even if the individual vehicles forming the group are not well-enough equipped to perform at least partly autonomous driving by themselves as individual vehicles, the group may anyway perform at least partly autonomous driving, since data may be derived from different sensors, e.g. located in different vehicles, of the group.

The group may be controllable so as to move as one body also when a foreign object, still-standing or moving, is present within a boundary of the group. The group may for example consider a vehicle being driven in a non-autonomous mode, i.e. by a driver. The foreign object may, at least temporarily, be located within the outer boundary of the group. If the foreign object is the vehicle being driven in a non-autonomous mode, the group may move around that vehicle, as both that vehicle and the group move forward on the road. If the foreign object is a still-standing or a slow-moving object, the vehicle may overtake that foreign object. Examples are given above.

The method is performed for the group when moving on a road of a public road network. The vehicles may be cars, buses, lorries or trucks or other vehicles intended for travelling on roads. The group may comprise different kinds of road vehicles, e.g. cars and lorries. Vehicles manufactured by different producers may be configured such that they can communicate with each other, e.g. by means of standardized protocols.

The road may comprise more than one lane, and the group may comprise vehicles being located in at least two different lanes. There may be vehicles in both lanes and/or a vehicle may be changing lane.

The method may be performed in different traffic scenarios, e.g. when travelling on a road, a main road or a motorway.

In addition, or as a complement, the method may be specifically be performed in an emergency situation, e.g. controlling the vehicles of the group to brake and/or move around an obstacle in a controlled way considering the movement of the group as a whole.

By utilizing information determined from sensors of other vehicles in the group, the performance of a safety system of a vehicle in the group may be improved as compared to the performance of the individual safety system of an individual vehicle.

In another aspect of the present disclosure there is provided a control system for controlling movement of a group of road vehicles as defined by claim 11.

### BRIEF DESCRIPTION OF THE DRAWINGS

The present invention will hereinafter be further explained by means of non-limiting examples with reference to the appended drawings wherein:

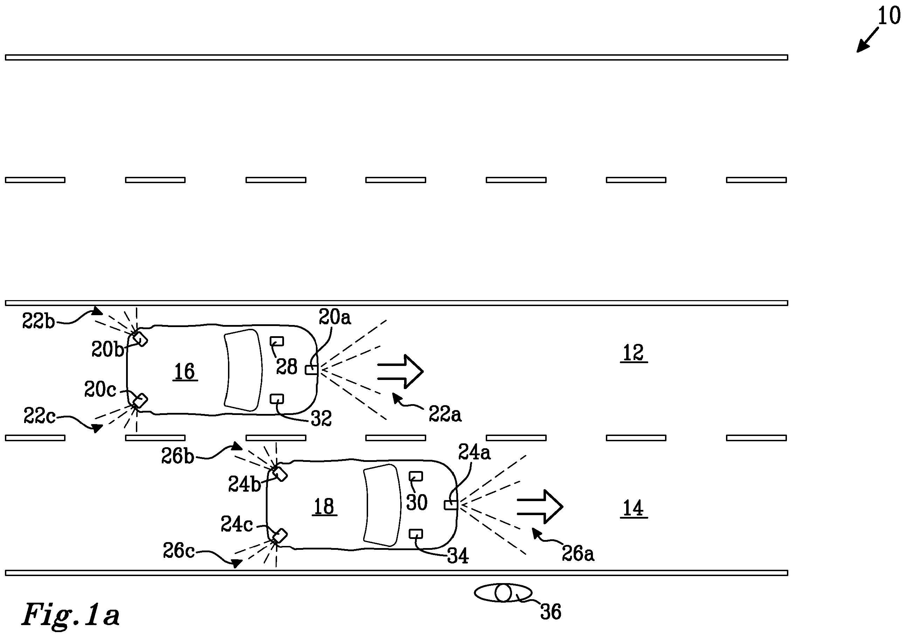

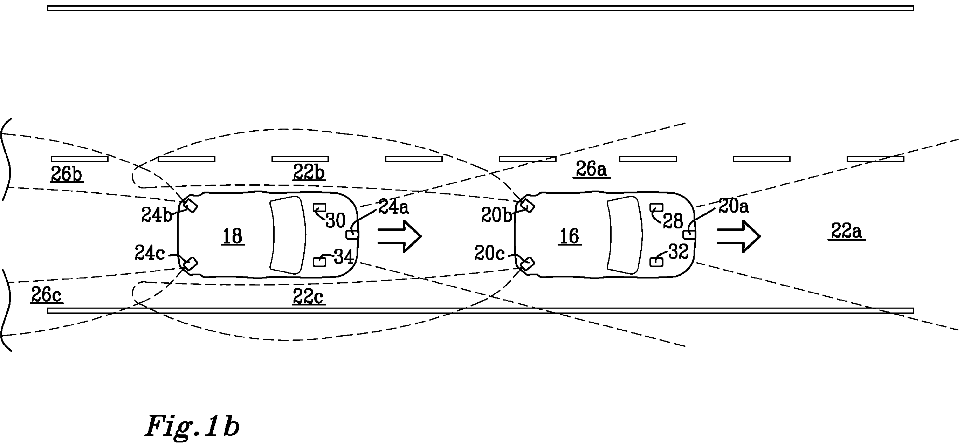

- Fig. 1 a: schematically illustrates how a group is formed,
- Fig. 1 b: illustrates a group according to the invention,
- Fig. 2: is a schematic view of a group according to the invention,
- Fig. 3a-c: schematically illustrates how the group moves around a foreign object.
- Fig. 4: is a schematic view of a control system according to the invention, and
- Fig. 5a-d: schematically illustrates another situation when the group moves around a foreign object.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

Figure 1 schematically illustrates a road 10 having a number of lanes, in the illustrated case two lanes leading in each direction, such that a first lane 12 and a second lane 14 are intended for traffic going to the right in Figure 1. The road 10 forms part of a public road network. A first vehicle 16 is driving in the first lane 12 and a second vehicle is driving in the second lane 14. There may also be, although not illustrated, a third vehicle, a fourth vehicle etc. In the assumed traffic situation of Figure 1, the two vehicles 16, 18 are driving as individual vehicles, not being a member of a group or a platoon, i.e. they are driving independent of each other from a control system point of view, although the two drivers may visually see each other.

The first vehicle 16 comprises a number of sensors 20a, 20b, 20c for determining data about an environment around the first vehicle 16. Each sensor has a corresponding field of view 22a, 22b, 22c. The sensors 20a, 20b, 20c may be of different kinds, e.g. being sensitive to different kinds of objects. The sensors 20a, 20b, 20c may be directed in the same or different directions. Purely as an example, the sensor may be a radar sensor 22a looking in a forward direction of the first vehicle 16, i.e. having the field of view 20a located in front of the first vehicle 16. There may also be sensors for determining data about the first vehicle 16 itself. In a similar way, the second vehicle 18 comprises a number of sensors 24a, 24b, 24c. Each sensor has a corresponding field of view 26a, 26b, 26c. The second vehicle 18 may comprise similar sensors as the first vehicle 16, or the sensors may be of a different number, a different kind and/or have different sensitivity.

The first vehicle 16 further comprises a first control unit 28, which is able to perform at least partly autonomous driving of the first vehicle 16. The first control unit 28 is in that case utilizing data from the sensors 20a, 20b, 20c of the first vehicle 16. It may also use external data being communicated to the vehicle, e.g. GPS data and data about the traffic situation. The second vehicle 18 comprises a second control unit 30, which is able to perform at least partly autonomous driving of the second vehicle 18. The second control unit 30 is in that case utilizing data from the sensors 24a, 24b, 24c of the second vehicle 18.

The first vehicle 16 also comprises a first communication means 32 and the second vehicle 18 further comprises a second communication means 34. The communication means 32, 34 are adapted to make it possible for the vehicles 16, 18 to communicate with each other, e.g. by means of radio signals. The communication units 32, 34 may also be used for communication of the external data, e.g. GPS data and data about the traffic situation.

It is further assumed in Figure 1 that the first vehicle 16 is driving at least partly autonomously, i.e. in an at least partly automated mode. The first vehicle may 16 move in a fully automated mode, i.e. fully autonomously. The concept of autonomous driving means that the vehicle is driven without human interaction. The concept is known to the skilled person and will not be explained in any detail herein. The first vehicle 16 may also be driven in a semi-automated mode, i.e. the first vehicle 16 autonomously performs some actions, as e.g. keeping a suitable distance to the vehicle ahead, while a driver performs other actions, as e.g. overtaking another vehicle when appropriate. The first vehicle may have a selectable automation level, such that 0% < automation level ≤ 100%.

If the first vehicle 16 detects, or more precisely its control unit 28 determines, that another vehicle or other vehicles in the vicinity is/are driving at least partly autonomously, or capable of driving at least partly autonomously, a group of vehicles in the meaning of this invention may be formed. In the illustrated embodiment of Figure 1, the first vehicle 16 could detect the second vehicle 18. The forming of the group may be made autonomously, e.g. being performed by the control units 28, 30 of the vehicles, or the driver of the first vehicle 16 and/or the second vehicle 18 may be asked for consent before being added to the group. As an alternative, one of the drivers of the vehicles 16, 18 may request a group to be formed. Since the vehicles 16, 18 are in the vicinity of each other, they are close enough, such that they can communicate with each other by the communication means 32, 34.

The second vehicle 18 may be driven at least partly autonomously like the first vehicle 16 before joining the group. Alternatively, the second vehicle 18 may be fully autonomously or semi-autonomously driven. It may even be driven by a driver for the moment, although the second vehicle 18 is adapted for driving at least partly autonomously, e.g. by having the appropriate control unit 30 and sensors 24a, 24b, 24c.

A group may hence, according to the invention, be formed by two vehicles already driving at least partly autonomously. By driving at least partly autonomously in the group instead of at least partly autonomously as individual vehicles, the vehicles can drive closer to each other, reducing air resistance and thereby saving fuel, which is positive for both environment and economy and also makes it possible to utilize the road network in a more efficient way. Road safety may be improved by also utilizing data input from the other vehicle.

Further, the group may be able to perform more complex autonomous operations than the vehicles would be able to if driving at least partly autonomously as individual vehicles. Purely as an example, if two at least partly autonomously driving vehicles have limited fields of view of their respective sensors, it may turn out that a combination of the fields of view of their sensors may be good enough for allowing the at least partly autonomously driving group, comprising the two vehicles, to at least partly autonomously perform lane changing or other operations, which the vehicles would not be able to perform in a safe way, if moving as two individual at least partly autonomously driving vehicles.

After having formed a group, the first vehicle 16 and the second vehicle 18 moves as one body. Either the first vehicle 16 or the second vehicle 18 may form a lead vehicle. The lead vehicle leads the group. Its control unit controls the movements of the one or more additional vehicles of the group, which are driven in an at least partly automated mode. The one or more additional vehicles follow the lead vehicle. The lead vehicle is driven in such a way, that its control unit considers the movement of the group as a whole and not just the first vehicle. The group is hence moved as one body, although the shape of the body may vary during the movement of the group.

The sensors 20a, 20b, 20c; 24a, 24b, 24c of the respective vehicles 16, 18 of the group complement each other, such that the group can utilize data from all sensors of the group. Purely as an example, an object 36 is located such that the sensor 24a of the second vehicle 18 is able detect it, while the sensor 20a of the first vehicle 16 is unable to detect the object 36, since the second vehicle 18 hides it. Since the group utilizes data from all sensors, the group as a whole can consider the object 36 when moving.

Figure 1b illustrates a traffic situation wherein the second vehicle 18 is driving behind the first vehicle 16. The vehicles 16, 18 comprises the sensors 20a, 20b, 20c; 24a, 24b, 24c described above and having their respective fields of view 22a, 22b, 22c; 26a, 26b, 26c. If the vehicles 16, 18 would only be utilizing their own sensors, there would be zones at the lateral sides of the respective vehicle 16, 18, which were uncovered. However, in the group the vehicles may use data from each other sensors. The second vehicle 18 may thus utilize information from the sensors 20b, 20c of the first vehicle 16 having rear-directed fields of view 22b, 22c. Thereby also the lateral sides of the second vehicle 18 are covered. Also the first vehicle 16 can benefit from being in the group by utilizing information from the forward-directed sensor 24a of the second vehicle 18 having a forward-directed field of view 26a. Hence also the lateral sides of the first vehicle 16 are covered. Further, the fields of view of some of the sensors 22b+26b, 22c+26c, 26a+22b, 26a+22c, 22a+26a partly overlap. In that case there is redundant information, which may be used to improve the accuracy of the determined data.

The forming of the group may be made conditional, considering effects related to comfort, safety, environment and/or economy. In most cases, the vehicles, and their users, will benefit from joining a group. The driver may relax. The vehicles can drive closer to each other, reducing air resistance and thereby saving fuel, which is positive for both environment and economy and also makes it possible to utilize the road network in a more efficient way. However, sometimes it may be better not to include a candidate vehicle in the group. Purely as an example, if one of the candidate vehicles for forming a group has a poor performance, e.g. only being able to move at a low speed, it would lower the speed of the whole group, and can thus be appropriate to reject such a candidate vehicle. Further, the capabilities and other characteristics of the candidate vehicle may be considered when adding the vehicle to the group on order to select a suitable position within the group. Purely as an example, if the candidate vehicle has a long braking distance, it may be located at the front of the group. As another example, the air resistance of the group may be optimized by selecting the relative positioning of the individual vehicles within the group.

As mentioned above, there may also be a third vehicle, a fourth vehicle etc. on the road 10, which may be joined to the group. The subsequent vehicles may be joined one at the time, such that first a two-vehicle group is formed, then a three-vehicle group etc., eventually forming a large group. Alternatively, or as a complement, the large group may be formed at once by joining many vehicles at the same time.

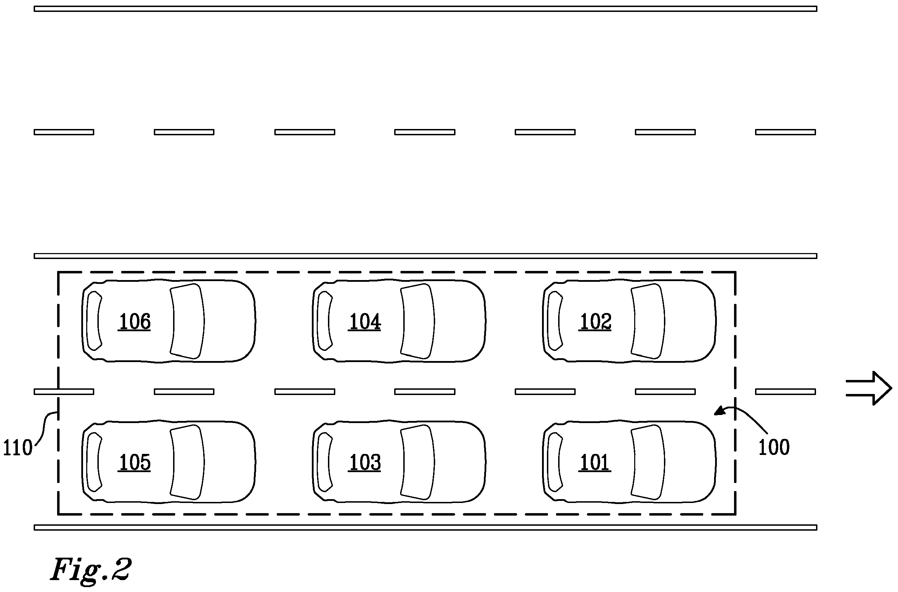

An example of a group 100 of road vehicles 101, 102, 103, 104, 105, 106 is schematically illustrated in Figure 2. When the group 100 has been formed, one of the vehicles functions as a lead vehicle. The lead vehicle is defined as the vehicle which controls the movement of the whole group. The one or more additional vehicles follow the lead vehicle. The one or more additional vehicles are driven in an at least partly automated mode when they are in the group. The lead vehicle may be chosen as the most capable of the vehicles forming the group. The lead vehicle may assume any position in the group. It is hence not necessary that the lead vehicle is at the front of the group.

The vehicles of the group are not mechanically fixed to each other, instead they can move relative to each other as longitudinal position, lateral position, speed and/or acceleration. For example, a car, i.e. first vehicle, towing a caravan, i.e. a second vehicle, would not form a group in the sense of this disclosure, since they are in a fixed relationship to each other by the towing hook and since the caravan is not capable of running in an at least partly automated mode, instead it is adapted to be towed by the car.

The vehicles 101, 102, 103, 104, 105, 106 of the group 100 are within communication range of the lead vehicle. There may also be other foreign vehicles, not belonging to the group, within the outer boundary 110 of the group, e.g. a vehicle not being capable of being driven at least partly autonomously. The group 100 will in that case use their sensors to keep track of the foreign vehicle, such that the group 100 considers the foreign vehicle when moving.

Similar as for the group of Figure 1, the vehicles 101, 102, 103, 104, 105, 106 comprise sensors. The lead vehicle, and its control unit, can utilize data from sensors of more than one vehicle and preferably of all vehicles of the group 100 to perform the movement of the group. The lead vehicle is at least partly autonomously driven in such a way, that its control unit considers the movement of the group as a whole. In particular the group 100 is steered as one unit. This differs from a platoon, where the lead vehicle is driven by a driver. The driver of a lead vehicle of a platoon drives the vehicle as an individual unit, in particular it is steered as an individual unit. In addition, the lead vehicle of the platoon is located at the front end of the platoon. Further, the driver of the lead vehicle of the platoon can only utilize data from the sensors of the own vehicle.

Further, even if the individual vehicles are not well-enough equipped to perform at least partly autonomous driving by themselves, the group may anyway perform at least partly autonomous driving, since data may be derived from different sensors.

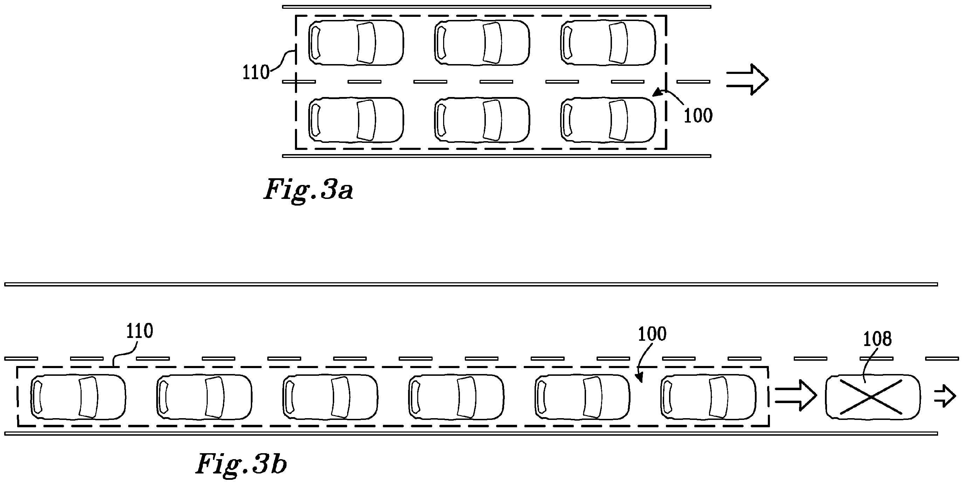

Since the group 100 is moved by considering the movement of the whole group, it is possible for the group 100 to comprise vehicles in more than one lane, or even vehicles changing lanes. The individual vehicles 101, 102, 103, 104, 105, 106 within the group 100 are moveable in relation to each other within the group. The whole group 100 moves as one body, however the body may have a variable shape, which will be further described below in conjunction with Figures 3a-c.

Figures 3a-c illustrate a group 100 like the one of Figure 2. In Figure 3a, the group drives in two different lanes and in Figure 3b all the vehicles drive in the same lane. As mentioned above, the group is moved as one body, although the shape of it may vary. For example, the configuration of Figure 3b will offer less air resistance than that of Figure 3a and may therefore be preferred at high speeds. The lead vehicle may have an arbitrary position in the group 100.

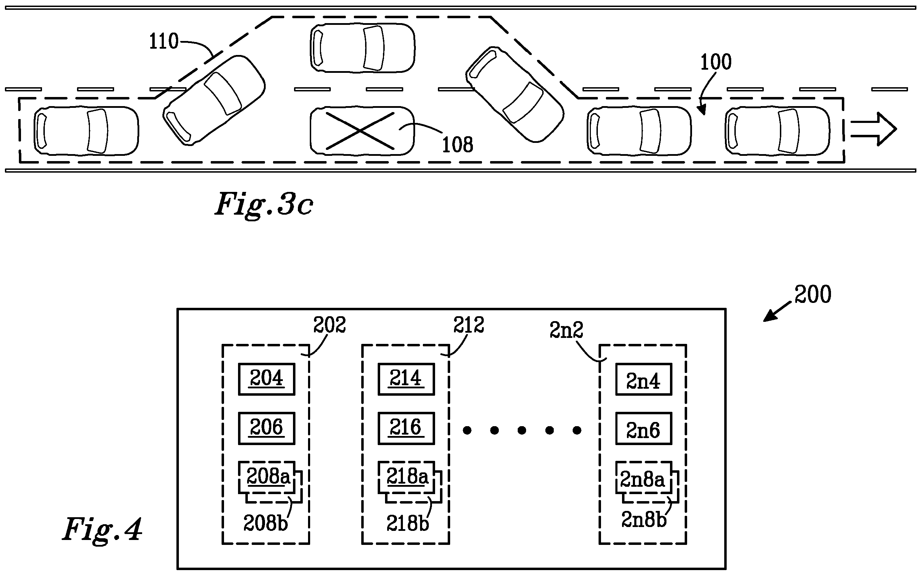

When the group 100 approaches a foreign object 108, e.g. a still-standing or slow-moving vehicle, it would be appropriate to overtake the foreign object 108. The group 100 may then pass foreign object 108 by means of the individual vehicles of the group 100 overtaking the foreign object 108, see Figure 3c, and then returning to a relative position similar to that before starting the overtaking, e.g. as in Figure 3b. If seen from above, it would look as if the group 100 would "float" around an obstacle in an amoeba-like way or move like a worm around the obstacle, i.e. the foreign object 108. During the whole operation of overtaking the foreign object 108, the group 100 would be moved as one body, although the body had different shapes during different phases of the operation.

If instead the group needs to brake, e.g. in order to avoid colliding with a still-standing object, all of the vehicles of the group may act simultaneously by performing the same or a similar action. The action of the individual vehicles of the group is in addition preferably adapted to the capabilities of each vehicle, such that a vehicle at the back does not collide with a vehicle at the front of the group, e.g. by braking too slowly in relation to the vehicle at the front.

Figure 4 illustrates a control system 200 according to the invention for controlling movement of a group of road vehicles. The group comprises a lead vehicle and n additional vehicles, with n being a positive integer, 1, 2, 3, .... The control system 200 comprises a first portion 202, which is physically located in the lead vehicle. The first portion 202 comprises a first control unit 204. The control system 200 further comprises a second portion 212 located in a first of the n one or more additional vehicles. The second portion 212 comprises a second control unit 214. If the group comprises more than one additional vehicle, there is also a third portion, ..., an nth portion, i.e. a portion for each additional vehicle, each portion comprising a respective second control unit, 214, ..., 2n4. The second control units 214, ..., 2n4 are adapted to in an at least partly automated mode allow the movement of the one or more additional vehicle hosting the second control units 214, ..., 2n4 to be controlled by the first control unit 204 of the lead vehicle.

The first portion 202 of the control system 200 further comprises a first communication means 206 physically located in the lead vehicle. The second portion 212 comprises a second communication means 216 for communication with the first communication means 206 of the lead vehicle. If the group comprises more than one additional vehicle, the third portion etc. comprises a respective second communication means located in each of the one or more additional vehicles.

The lead vehicle thus comprises the first control unit 204 and the first communication means 206. Each of the n one or more additional vehicles comprises a second control unit 214,..., 2n4 and a second communication means 216, ..., 2n6. The second control unit 214 is adapted to perform at least partly autonomous driving of the one or more additional vehicles based on communication from the lead vehicle in such a way that the group as a whole moves as one body, although the body may have a varying shape. The second communication means 216 is able to at least receive information from the first communication means 206, and preferably also able to transmit information to the first communication means 206.

The control system 200 comprises at least one sensor 208a, 208b located in the lead vehicle for determining data about the lead vehicle and/or an environment around the lead vehicle, the first control unit 204 of the lead vehicle being adapted for at least partly autonomous driving of the lead vehicle, in such a way that the group as a whole is adapted to be at least partly autonomously driven as one body.

The control system 200 further comprises at least one sensor located in at least one, preferably a majority, more preferably substantially all, of the one or more additional vehicles for determining data about the one or more additional vehicle and/or an environment around the one or more additional vehicle, the data being communicated to the first control unit 204 and utilized for controlling the movement of the group. Figure 4 exemplifies this by illustrating two sensors 218a, 218b, ...2n8a, 2n8b, in each of the n additional vehicle's. However, the number, type of and capability of the sensors may vary from vehicle to vehicle.

Suitable control units, sensors and communication means are similar to those utilized for platooning and are thus, as such, known by the skilled person. See for example the above-mentioned Final report of the SARTRE project.

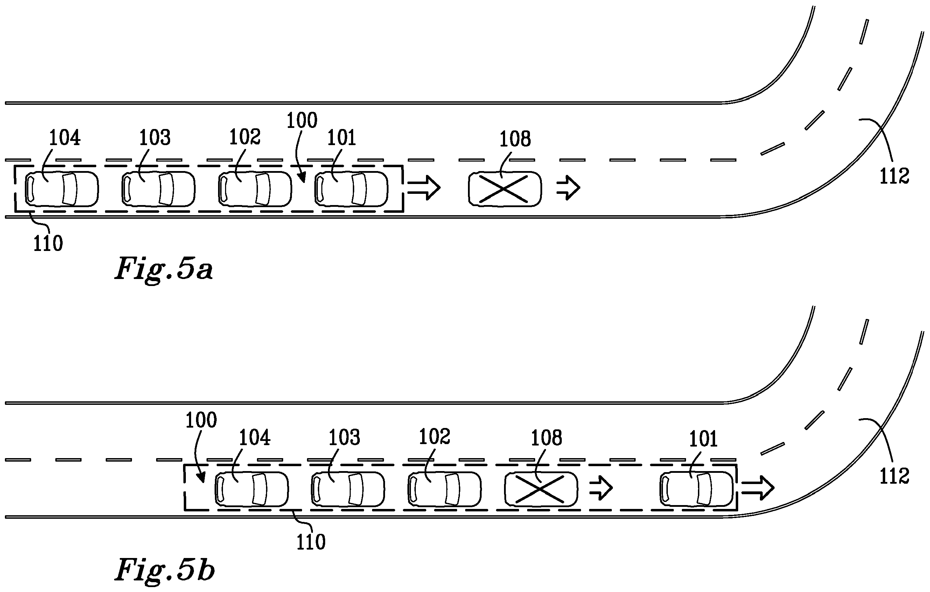

Figure 5a illustrates a traffic situation, when the group 100 when travelling on a road with limited visibility, e.g. due to a curve or a hill crest, approaches a foreign object 108, e.g. a slow-moving vehicle, and it would be appropriate to overtake the foreign object 108. The traffic situation differs from that of Figures 3b and 3c in that the road comprises a sharp curve 112, and neither the sensors of the vehicles, nor the drivers, can see what is happening on the other side of the curve 112. However, the first vehicle 101 at the front of the group 100 may overtake the foreign object 108 before the curve, while there still is enough distance to the curve 112 to perform a safe overtaking.

The group is then split in two subgroups. See Figure 5b. A first subgroup comprises the first vehicle 101 in front of the foreign object 108, and the rest of the vehicles 102, 103, 104 form a second subgroup behind the foreign object 108. The vehicles are in that situation before, but quite close to, the curve 112.

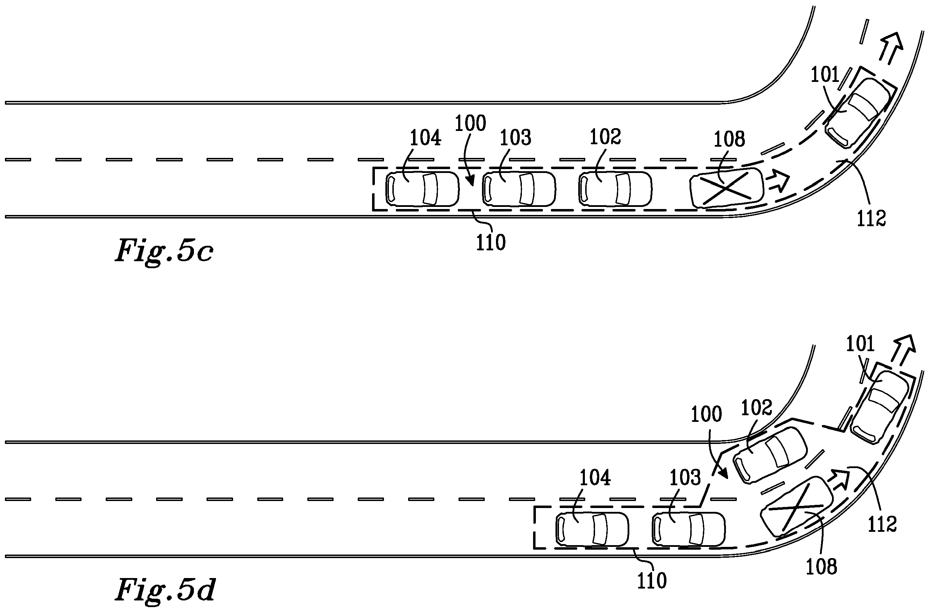

After a while, the first vehicle 101 has passed the curve 112 and its sensors are able to overlook the traffic situation behind the curve 112, e.g. as regards oncoming traffic, road obstructions or further curves. See Figure 5c. The second vehicle 102 is still behind the curve 112. However, since the vehicles of the group 100 cooperate, the second vehicle 102 of the group 100 may use information from one or more sensors of the first vehicle 101, which has already overtaken the foreign object 108 to establish if the traffic situation behind the curve 112 is suitable for overtaking, e.g. no oncoming traffic.

Hence, the second vehicle 102 may perform a safe overtaking, although it could not detect that it is safe by only using its own sensors. See Figure 5d.

Sometimes, the traffic situation is not suitable right away for the second vehicle 102 to perform a safe overtaking. The first vehicle 101 may then continue as a subgroup moving in front of the foreign object 108 and the rest of the group may continue, as another subgroup, moving behind the foreign object, until a suitable traffic situation arises. The sensors of all the vehicles of the group may be utilized when judging when the traffic situation is suitable.

If instead the second vehicle 102 had not been a member of the group 100, it would have had to only utilize its own sensors, or what its driver could see, and the second vehicle 102 would not have been able to overtake in such a situation as illustrated in Figure 5d. Instead the second vehicle 102 would have had to wait until it itself could establish that the traffic situation is suitable. Consequently, the method of the invention makes it possible to perform an overtaking operation in a safe way on a road section, which traditionally would be deemed as unsuitable.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A method for controlling movement of a group (100) of road vehicles (101, 102, 103, 104, 105, 106), said group (100) comprising a lead vehicle and one or more additional vehicles,
said lead vehicle comprising a first control unit (204) and a first communication means (206),
said one or more additional vehicles each comprising a second control unit (214, ...2n4), which is adapted to in an at least partly automated mode have the movement of said one or more additional vehicle controlled by said first control unit (204) of said lead vehicle,
said one or more additional vehicles each comprising a second communication means (216, ..., 2n6) for communication with said first communication means (206) of said lead vehicle,
**characterized by**
said lead vehicle being adapted to assume an arbitrary position in said group (100),
said lead vehicle being adapted to control the movement of said whole group (100), said vehicles (101, 102, 103, 104, 105, 106) of said group (100) being moveable relative to each other within said group (100) as regards longitudinal position, lateral position, speed and acceleration,
said group (100) of road vehicles (101, 102, 103, 104, 105, 106) being controllable by said first control unit of said lead vehicle so as to move as one body, a shape of said body being variable, said vehicles (101, 102, 103, 104, 105, 106) of said group (100) thereby cooperating with each other,
wherein at least one of said one or more additional vehicles comprises at least one sensor (218a, 218b, ..., 2n8a, 2n8b) for determining data about said one or more additional vehicle and/or an environment around said one or more additional vehicle, said data being communicated to said lead vehicle and utilized for controlling the movement of said group (100).

2. The method according to claim 1, wherein all of said one or more additional vehicles comprises at least one sensor (218a, 218b, ..., 2n8a, 2n8b) for determining data about said one or more additional vehicle and/or an environment around said one or more additional vehicle, said data being communicated to said lead vehicle and utilized for controlling the movement of said group (100).

3. The method according to claim 1 or 2, wherein said group (100) is controllable so as to be steered as one body.

4. The method according to any one of the preceding claims, wherein said lead vehicle comprises at least one sensor (208a, 208b) for determining data about said lead vehicle and/or an environment around said lead vehicle, said method comprising said lead vehicle being driven in the at least partly automated mode by utilizing data from said at least one sensor (208a, 208b), thereby allowing said group (100) as a whole to be at least partly autonomously driven as one body.

5. The method according to any one of the preceding claims, wherein said lead vehicle and/or said one or more additional vehicles have/has a selectable automation level, such that 0% < automation level ≤ 100%.

6. The method according to any one of the preceding claims, wherein said sensors (218a, 218b, ..., 2n8a, 2n8b) located in different vehicles (101, 102, 103, 104, 105, 106) of said group (100) are used to complement each other.

7. The method according to any one of the preceding claims, wherein said group (100) is controllable so as to move as one body also when a foreign object (108), still-standing or moving, is present within a boundary (110) of said group (100).

8. The method according to any one of the preceding claims being performed for said group (100) when moving on a road (10) of a public road network.

9. The method according to claim 8, wherein said road (10) comprises more than one lane (12, 14), and said group (100) comprises vehicles (101, 102, 103, 104, 105, 106) being located in at least two different lanes (12, 14).

10. The method according to any one of the preceding claims being performed in an emergency situation.

11. A control system (200) for controlling movement of a group (100) of road vehicles (101, 102, 103, 104, 105, 106), said group (100) comprising a lead vehicle and one or more additional vehicles,
said control system comprising a first control unit (204) located in said lead vehicle and one or more second control units (214, ...2n4) located in each of said one or more additional vehicles,
said second control units (214, ...2n4) being adapted to in an at least partly automated mode allow the movement of said one or more additional vehicle hosting said second control unit (21 4, ...2n4) to be controlled by said first control unit (204) of said lead vehicle,
said control system (200) further comprising a first communication means (206) located in said lead vehicle and second communication means (216, ...2n6) located in each of said one or more additional vehicles for communication with said first communication means (206) of said lead vehicle,
**characterized by**
said lead vehicle being adapted to assume an arbitrary position in said group (100),
said lead vehicle being adapted to control the movement of said whole group (100), said vehicles (101, 102, 103, 104, 105, 106) of said group (100) being moveable relative to each other within said group (100) as regards longitudinal position, lateral position, speed and acceleration,
said control system (200) being adapted to control said group (100) of vehicles so as to move as one body, a shape of said body being variable, said vehicles (101, 102, 103, 104, 105, 106) of said group (100) thereby cooperating with each other, wherein said control system (200) further comprises at least one sensor (218a, 218b, ..., 2n8a, 2n8b) located in at least one of said one or more additional vehicles for determining data about said one or more additional vehicle and/or an environment around said one or more additional vehicle, said data being communicated to said first control unit (204) and utilized for controlling the movement of said group (100).

12. The control system (200) according to claim 11, wherein said control system (200) further comprises at least one sensor (208a, 208b) located in said lead vehicle for determining data about said lead vehicle and/or an environment around said lead vehicle, said first control unit (204) of said lead vehicle being adapted for at least partly autonomous driving of said lead vehicle, in such a way that said group (100) as a whole is adapted to be at least partly autonomously driven as one body.

## Patentansprüche

1. Verfahren zum Steuern einer Bewegung einer Gruppe (100) von Straßenfahrzeugen (101, 102, 103, 104, 105, 106), wobei die Gruppe (100) ein Führungsfahrzeug und ein oder mehrere zusätzliche Fahrzeuge umfasst, wobei das Führungsfahrzeug eine erste Steuereinheit (204) und ein erstes Kommunikationsmittel (206) umfasst,
wobei das eine oder die mehreren zusätzlichen Fahrzeuge jeweils eine zweite Steuereinheit (214, ...2n4) umfassen, die ausgelegt ist, in einem zumindest teilweise automatisierten Modus die Bewegung des einen oder der mehreren zusätzlichen Fahrzeugs durch die erste Steuereinheit (204) des Führungsfahrzeugs steuern zu lassen,
wobei das eine oder die mehreren zusätzlichen Fahrzeuge jeweils ein zweites Kommunikationsmittel (216, ..., 2n6) zur Kommunikation mit dem ersten Kommunikationsmittel (206) des Führungsfahrzeugs umfassen,
**dadurch gekennzeichnet, dass**
das Führungsfahrzeug ausgelegt ist, eine beliebige Position in der Gruppe (100) einzunehmen,
wobei das Führungsfahrzeug ausgelegt ist, die Bewegung der gesamten Gruppe (100) zu steuern, wobei die Fahrzeuge (101, 102, 103, 104, 105, 106) der Gruppe (100) relativ zueinander innerhalb der Gruppe (100) in Bezug auf Längsposition, seitliche Position, Geschwindigkeit und Beschleunigung beweglich sind, wobei die Gruppe (100) von Straßenfahrzeugen (101, 102, 103, 104, 105, 106) durch die erste Steuereinheit des Führungsfahrzeugs derart steuerbar sind, dass sie sich als ein Körper bewegen, wobei eine Form des Körpers variabel ist, wobei die Fahrzeuge (101, 102, 103, 104, 105, 106) der Gruppe (100) dadurch miteinander kooperieren,
wobei mindestens eines der einen oder mehreren zusätzlichen Fahrzeuge mindestens einen Sensor (218a, 218b, ..., 2n8a, 2n8b) zum Bestimmen von Daten über das eine oder die mehreren zusätzliche Fahrzeug und/oder eine Umgebung um das eine oder die mehreren zusätzliche Fahrzeug umfasst, wobei die Daten zu dem Führungsfahrzeug kommuniziert und zum Steuern der Bewegung der Gruppe (100) genutzt werden.

2. Verfahren nach Anspruch 1, wobei alle der einen oder mehreren zusätzlichen Fahrzeuge mindestens einen Sensor (218a, 218b, ..., 2n8a, 2n8b) zum Bestimmen von Daten über das eine oder die mehreren zusätzlichen Fahrzeug und/oder eine Umgebung um das eine oder die mehreren zusätzlichen Fahrzeug umfassen, wobei die Daten zu dem Führungsfahrzeug kommuniziert und zum Steuern der Bewegung der Gruppe (100) genutzt werden.

3. Verfahren nach Anspruch 1 oder 2, wobei die Gruppe (100) derart steuerbar ist, dass sie als ein Körper gelenkt wird.

4. Verfahren nach einem der vorhergehenden Ansprüche, wobei das Führungsfahrzeug mindestens einen Sensor (208a, 208b) zum Bestimmen von Daten über das Führungsfahrzeug und/oder eine Umgebung um das Führungsfahrzeug umfasst, wobei das Verfahren umfasst, dass das Führungsfahrzeug in dem zumindest teilweise automatisierten Modus durch Nutzen von Daten von dem mindestens einen Sensor (208a, 208b) gefahren wird, wodurch der Gruppe (100) als Ganzes ermöglicht wird, zumindest teilweise autonom als ein Körper gefahren zu werden.

5. Verfahren nach einem der vorhergehenden Ansprüche, wobei das Führungsfahrzeug und/oder das eine oder die mehreren zusätzlichen Fahrzeuge einen auswählbaren Automationsgrad, beispielsweise 0 % < Automationsgrad ≤ 100 %, aufweisen/aufweist.

6. Verfahren nach einem der vorhergehenden Ansprüche, wobei die Sensoren (218a, 218b, ..., 2n8a, 2n8b), die sich in unterschiedlichen Fahrzeugen (101, 102, 103, 104, 105, 106) der Gruppe (100) befinden, verwendet werden, um einander zu ergänzen.

7. Verfahren nach einem der vorhergehenden Ansprüche, wobei die Gruppe (100) derart steuerbar ist, dass sie sich als ein Körper bewegt, auch wenn ein Fremdobjekt (108), stillstehend oder sich bewegend, innerhalb einer Grenze (110) der Gruppe (100) vorhanden ist.

8. Verfahren nach einem der vorhergehenden Ansprüche, das für die Gruppe (100) durchgeführt wird, wenn sie sich auf einer Straße (10) eines öffentlichen Straßennetzes bewegt.

9. Verfahren nach Anspruch 8, wobei die Straße (10) mehr als eine Spur (12, 14) umfasst, und die Gruppe (100) Fahrzeuge (101, 102, 103, 104, 105, 106) umfasst, die sich in mindestens zwei unterschiedlichen Spuren (12, 14) befinden.

10. Verfahren nach einem der vorhergehenden Ansprüche, das in einer Notfallsituation durchgeführt wird.

11. Steuersystem (200) zum Steuern einer Bewegung einer Gruppe (100) von Straßenfahrzeugen (101, 102, 103, 104, 105, 106), wobei die Gruppe (100) ein Führungsfahrzeug und ein oder mehrere zusätzliche Fahrzeuge umfasst,
wobei das Steuersystem eine erste Steuereinheit (204), die sich in dem Führungsfahrzeug befindet, und eine oder mehrere zweite Steuereinheiten (214, ...2n4), die sich in jedem des einen oder der mehreren zusätzlichen Fahrzeuge befindet, umfasst,
wobei die zweiten Steuereinheiten (214, ...2n4) ausgelegt sind, in einem zumindest teilweise automatisierten Modus zu ermöglichen, dass die Bewegung des einen oder der mehreren zusätzlichen Fahrzeugs, das die zweite Steuereinheit (214, ...2n4) beherbergt, durch die erste Steuereinheit (204) des Führungsfahrzeugs gesteuert wird,
wobei das Steuersystem (200) ferner ein erstes Kommunikationsmittel (206), das sich in dem Führungsfahrzeug befindet, und zweite Kommunikationsmittel (216, ...2n6), die sich in jedem des einen oder der mehreren zusätzlichen Fahrzeuge zur Kommunikation mit dem ersten Kommunikationsmittel (206) des Führungsfahrzeugs befinden, umfasst,
**dadurch gekennzeichnet, dass**
das Führungsfahrzeug ausgelegt ist, eine beliebige Position in der Gruppe (100) einzunehmen,
wobei das Führungsfahrzeug ausgelegt ist, die Bewegung der gesamten Gruppe (100) zu steuern, wobei die Fahrzeuge (101, 102, 103, 104, 105, 106) der Gruppe (100) relativ zueinander innerhalb der Gruppe (100) in Bezug auf Längsposition, seitliche Position, Geschwindigkeit und Beschleunigung beweglich sind, wobei das Steuersystem (200) ausgelegt ist, die Gruppe (100) von Fahrzeugen derart zu steuern, dass sie sich als ein Körper bewegen, wobei eine Form des Körpers variabel ist, wobei die Fahrzeuge (101, 102, 103, 104, 105, 106) der Gruppe (100) dadurch miteinander kooperieren,
wobei das Steuersystem (200) ferner mindestens einen in mindestens einem des einen oder der mehreren zusätzlichen Fahrzeuge befindlichen Sensor (218a, 218b, ..., 2n8a, 2n8b) zum Bestimmen von Daten über das eine oder die mehreren zusätzliche Fahrzeug und/oder eine Umgebung um das eine oder die mehreren zusätzliche Fahrzeug umfasst, wobei die Daten zu der ersten Steuereinheit (204) kommuniziert und zum Steuern der Bewegung der Gruppe (100) genutzt werden.

12. Steuersystem (200) nach Anspruch 11, wobei das Steuersystem (200) ferner mindestens einen in dem Führungsfahrzeug befindlichen Sensor (208a, 208b) zum Bestimmen von Daten über das Führungsfahrzeug und/oder eine Umgebung um das Führungsfahrzeug umfasst, wobei die erste Steuereinheit (204) des Führungsfahrzeugs zum zumindest teilweise autonomen Fahren des Führungsfahrzeugs auf derartige Weise ausgelegt ist, dass die Gruppe (100) als ein Ganzes ausgelegt ist, zumindest teilweise autonom als ein Körper gefahren zu werden.

## Revendications

1. Procédé pour commander le mouvement d'un groupe (100) de véhicules routiers (101, 102, 103, 104, 105, 106), ledit groupe (100) comprenant un véhicule principal et un ou plusieurs véhicules supplémentaires,
ledit véhicule principal comprenant une première unité de commande (204) et un premier moyen de communication (206),
lesdits un ou plusieurs véhicules supplémentaires comprenant chacun une seconde unité de commande (214, ... 2n4), qui est adaptée pour, dans un mode au moins partiellement automatisé, faire en sorte que le mouvement desdits un ou plusieurs véhicules supplémentaires soit commandé par ladite première unité de commande (204) dudit véhicule principal,
lesdits un ou plusieurs véhicules supplémentaires comprenant chacun un second moyen de communication (216, ... , 2n6) pour communication avec ledit premier moyen de communication (206) dudit véhicule principal,
**caractérisé en ce que**
ledit véhicule principal est adapté pour adopter une position arbitraire dans ledit groupe (100),
ledit véhicule principal est adapté pour commander le mouvement dudit groupe entier (100), lesdits véhicules (101, 102, 103, 104, 105, 106) dudit groupe (100) étant mobiles les uns relativement aux autres au sein dudit groupe (100) en ce qui concerne la position longitudinale, la position latérale, la vitesse et l'accélération,
ledit groupe (100) de véhicules routiers (101, 102, 103, 104, 105, 106) est commandable par ladite première unité de commande dudit véhicule principal afin de se déplacer sous forme de corps unique, une forme dudit corps étant variable, lesdits véhicules (101, 102, 103, 104, 105, 106) dudit groupe (100) coopérant ainsi les uns avec les autres,
dans lequel au moins un desdits un ou plusieurs véhicules supplémentaires comprend au moins un capteur (218a, 218b, ... , 2n8a, 2n8b) pour déterminer des données concernant lesdits un ou plusieurs véhicules supplémentaires et/ou un environnement autour desdits un ou plusieurs véhicules supplémentaires, lesdites données étant communiquées audit véhicule principal et utilisées pour commander le mouvement dudit groupe (100).

2. Procédé selon la revendication 1, dans lequel la totalité desdits un ou plusieurs véhicules supplémentaires comprend au moins un capteur (218a, 218b, ... , 2n8a, 2n8b) pour déterminer des données concernant lesdits un ou plusieurs véhicules supplémentaires et/ou un environnement autour desdits un ou plusieurs véhicules supplémentaires, lesdites données étant communiquées audit véhicule principal et utilisées pour commander le mouvement dudit groupe (100).

3. Procédé selon la revendication 1 ou 2, dans lequel ledit groupe (100) est commandable afin d'être guidé sous forme de corps unique.

4. Procédé selon l'une quelconque des revendications précédentes, dans lequel ledit véhicule principal comprend au moins un capteur (208a, 208b) pour déterminer des données concernant ledit véhicule principal et/ou un environnement autour dudit véhicule principal, ledit procédé comprenant le fait que ledit véhicule principal est conduit dans le mode au moins partiellement automatisé en utilisant des données provenant dudit au moins un capteur (208a, 208b), ainsi permettant audit groupe (100) dans l'ensemble d'être au moins partiellement conduit de façon autonome sous forme de corps unique.

5. Procédé selon l'une quelconque des revendications précédentes, dans lequel ledit véhicule principal et/ou lesdits un ou plusieurs véhicules supplémentaires a/ont un niveau d'automatisation sélectionnable, tel que 0 % < niveau d'automatisation ≤ 100 %.

6. Procédé selon l'une quelconque des revendications précédentes, dans lequel lesdits capteurs (218a, 218b, ... , 2n8a, 2n8b) situés dans différents véhicules (101, 102, 103, 104, 105, 106) dudit groupe (100) sont utilisés pour se complémenter les uns les autres.

7. Procédé selon l'une quelconque des revendications précédentes, dans lequel ledit groupe (100) est commandable afin de se déplacer sous forme de corps unique également lorsqu'un objet étranger (108), immobile ou en déplacement, est présent au sein d'une limite (110) dudit groupe (100).

8. Procédé selon l'une quelconque des revendications précédentes, réalisé pour ledit groupe (100) lorsqu'il se déplace sur une route (10) d'un réseau routier public.

9. Procédé selon la revendication 8, dans lequel ladite route (10) comprend plus d'une voie (12, 14), et ledit groupe (100) comprend des véhicules (101, 102, 103, 104, 105, 106) situés dans au moins deux voies différentes (12, 14).

10. Procédé selon l'une quelconque des revendications précédentes, réalisé dans une situation d'urgence.

11. Système de commande (200) pour commander le mouvement d'un groupe (100) de véhicules routiers (101, 102, 103, 104, 105, 106), ledit groupe (100) comprenant un véhicule principal et un ou plusieurs véhicules supplémentaires,
ledit système de commande comprenant une première unité de commande (204) située dans ledit véhicule principal et une ou plusieurs secondes unités de commande (214, ... 2n4) situées dans chacun desdits un ou plusieurs véhicules supplémentaires,
lesdites secondes unités de commande (214, ... 2n4) étant adaptées pour, dans un mode au moins partiellement automatisé, permettre au mouvement desdits un ou plusieurs véhicules supplémentaires logeant ladite seconde unité de commande (21 4, ... 2n4) d'être commandé par ladite première unité de commande (204) dudit véhicule principal,
ledit système de commande (200) comprenant en outre un premier moyen de communication (206) situé dans ledit véhicule principal et un second moyen de communication (216, ... 2n6) situé dans chacun desdits un ou plusieurs véhicules supplémentaires pour communication avec ledit premier moyen de communication (206) dudit véhicule principal,
**caractérisé en ce que**
ledit véhicule principal est adapté pour adopter une position arbitraire dans ledit groupe (100),
ledit véhicule principal est adapté pour commander le mouvement dudit groupe entier (100), lesdits véhicules (101, 102, 103, 104, 105, 106) dudit groupe (100) étant mobiles les uns relativement aux autres au sein dudit groupe (100) en ce qui concerne la position longitudinale, la position latérale, la vitesse et l'accélération,
ledit système de commande (200) est adapté pour commander ledit groupe (100) de véhicules afin de se déplacer sous forme de corps unique, une forme dudit corps étant variable, lesdits véhicules (101, 102, 103, 104, 105, 106) dudit groupe (100) coopérant ainsi les uns avec les autres,
dans lequel ledit système de commande (200) comprend en outre au moins un capteur (218a, 218b, ... , 2n8a, 2n8b) situé dans au moins un desdits un ou plusieurs véhicules supplémentaires pour déterminer des données concernant lesdits un ou plusieurs véhicules supplémentaires et/ou un environnement autour desdits un ou plusieurs véhicules supplémentaires, lesdites données étant communiquées à ladite première unité de commande (204) et utilisées pour commander le mouvement dudit groupe (100).

12. Système de commande (200) selon la revendication 11, dans lequel ledit système de commande (200) comprend en outre au moins un capteur (208a, 208b) situé dans ledit véhicule principal pour déterminer des données concernant ledit véhicule principal et/ou un environnement autour dudit véhicule principal, ladite première unité de commande (204) dudit véhicule principal étant adaptée pour la conduite au moins partiellement autonome dudit véhicule principal, de manière telle que ledit groupe (100) dans l'ensemble soit adapté pour être conduit au moins partiellement de façon autonome sous forme de corps unique.
